# EUROPÄISCHE PATENTSCHRIFT

(11) **EP 2 846 147 B1**
(45) Veröffentlichungstag und Bekanntmachung des Hinweises auf die Patenterteilung: **01.01.2020**
(21) Anmeldenummer: 13183391.5
(22) Anmeldetag: 06.09.2013
(51) Int. Cl.: G01N 17/00

(54) **Bewitterungsprüfung unter Nutzung von Mittels RFID-Chips identifizierbaren Strahlungsquellen**
Weathering Test using radiation source identifiable by a RFID chip
Essai de vieillissement utilisant une source de rayonnement identifiable par une puce RFID

(43) Veröffentlichungstag der Anmeldung: 11.03.2015
(73) Patentinhaber: Atlas Material Testing Technology GmbH, 63589 Linsengericht/Altenhasslau (DE)
(72) Erfinder: RUDOLPH, Bernd, 63755 Alzenau (DE); MARCH, Peter, 65931 Frankfurt (DE)
(74) Vertreter: Lambsdorff & Lange Patentanwälte Partnerschaft mbB

(56) Entgegenhaltungen:
- EP-A1- 0 487 202
- EP-A1- 1 528 388
- EP-A1- 2 506 687
- DE-A1-102006 060 418
- US-A- 4 831 564
- US-A1- 2002 139 928
- US-A1- 2003 155 869
- US-A1- 2008 185 539

## Beschreibung

Die vorliegende Erfindung betrifft eine Vorrichtung zur künstlichen Bewitterung oder Lichtechtheitsprüfung von Proben und eine Strahlungsquelle für eine Vorrichtung zur künstlichen Bewitterung oder Lichtechtheitsprüfung von Proben.

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle eine Xenon-Gasentladungslampe eingesetzt wird. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsprüfgeräten wird als Strahlungsquelle zumeist eine Xenon-Gasentladungslampe eingesetzt, da mit dieser bekanntermaßen das Sonnenspektrum recht gut simuliert werden kann. Es sind jedoch auch andere Strahlungsquellen, wie beispielsweise Metallhalogenidlampen oder Fluoreszenz-Lampen für den Einsatz in Bewitterungsprüfgeräten denkbar.

Ein wichtiges Kriterium für den Betrieb einer Strahlungsquelle innerhalb eines Bewitterungsprüfgeräts ist deren spektrale Qualität. Es ist von hoher Bedeutung, dass die eingesetzten Lampen über ihre gesamte Lebensdauer das geforderte sonnenlichtähnliche Spektrum erzeugen. Daneben ist auch die Lebensdauer der Strahlungsquelle von hoher Bedeutung, da die Strahlungsquelle ständig unter hoher Belastung betrieben wird, um eine stark intensivierte Bestrahlung der Proben zu ermöglichen. Deshalb ist eine gleichbleibend hohe Qualität der Strahlungsquellen für den Betrieb beim Kunden von hoher Bedeutung. In der gegenwärtigen Situation ist es jedoch mög-Bedeutung. In der gegenwärtigen Situation ist es jedoch möglich, in Bewitterungsprüfgeräte Strahlungsquellen unterschiedlicher Herkunft und somit potentiell unterschiedlicher Qualität einzusetzen, wobei sich eine eventuell minderwertige Qualität oftmals erst im Betrieb durch vorzeitige Abweichung des Strahlungsspektrums vom Sonnenspektrum, vorzeitigen Rückgang der Strahlungsleistung oder gar Totalausfall bemerkbar macht. Des Weiteren ist es derzeit nicht möglich, bei Einsatz einer eventuell schon früher eingesetzten Strahlungsquelle kundenseitig deren Historie, etwa die bereits geleisteten Betriebsstunden, festzustellen und diese gegebenenfalls für den weiteren Betrieb der Strahlungsquelle zu berücksichtigen.

Die Druckschrift US 4 831 564 A offenbart eine Vorrichtung zur künstlichen Bewitterung oder Lichtechtheitsprüfung von Proben mit einer Bewitterungskammer, in welcher mindestens eine Probe anordenbar ist, und mindestens einer Strahlungsquelle, welche in der Bewitterungskammer angeordnet ist. Die Strahlungsquelle ist mit einer Speichereinrichtung verbunden, in welcher Daten über die Strahlungsquelle speicherbar oder gespeichert sind.

Die Druckschrift US 2003/155869 A1 offenbart eine Startervorrichtung für eine Gasentladungslampe, welche mit einem RFID-Chip versehen ist, in welchem Informationen über die Gasentladungslampe gespeichert sind. Diese Informationen bestehen aus der Seriennummer der Gasentladungslampe und ihrer Vorwärmzeit und können durch eine Leseeinrichtung ausgelesen werden.

Es ist demzufolge Aufgabe der vorliegenden Erfindung, eine Vorrichtung zur künstlichen Bewitterung oder Lichtechtheitsprüfung von Proben und eine Strahlungsquelle für eine derartige Vorrichtung anzugeben, durch welche dem Kunden eine Information über eine von ihm eingesetzte Strahlungsquelle bereitgestellt werden kann.

Diese Aufgabe wird mit den Merkmalen der unabhängigen Patentansprüche gelöst. Vorteilhafte Weiterbildungen und Ausgestaltungen sind Gegenstand von Unteransprüchen.

Ein wesentlicher Gedanke der vorliegenden Erfindung besteht darin, eine für den Kunden verbesserte Identifizierbarkeit von in Bewitterungsgeräten einzusetzenden Strahlungsquellen bereitzustellen. Nach dem jetzigen Stand sind diese Strahlungsquellen für den Kunden prinzipiell nicht voneinander unterscheidbar und der Kunde hat beim Einsatz einer Strahlungsquelle in ein Bewitterungsprüfgerät keinerlei Information darüber, ob die Strahlungsquelle beispielsweise ein Originalprodukt des Herstellers ist und/oder ob die Strahlungsquelle eventuell bereits früher eingesetzt wurde. Dies kann dadurch verbessert werden, dass die Strahlungsquelle mit einer geeigneten Speichereinrichtung verbunden ist, auf weleher Daten betreffend die Herkunft und/oder die Historie der Strahlungsquelle gespeichert oder speicherbar sein können.

Eine erfindungsgemäße Vorrichtung zur künstlichen Bewitterung oder Lichtechtheitsprüfung von Proben weist demzufolge eine Bewitterungskammer, in welcher mindestens eine Probe anordenbar ist, und mindestens eine Strahlungsquelle auf, welche in der Bewitterungskammer angeordnet ist, wobei jede Strahlungsquelle mit einer Speichereinrichtung versehen ist, in welcher Daten über die Strahlungsquelle speicherbar oder gespeichert sind.

Gemäß einer Ausführungsform der erfindungsgemäßen Vorrichtung dienen die auf der Speichereinrichtung gespeicherten Daten der Autorisierung und/oder Identifizierung der Strahlungsquelle. Es ist vorgesehen, dass nach Einsatz einer Strahlungsquelle in ein Bewitterungsprüfgerät als erstes eine Autorisierung derart erfolgt, dass geprüft wird, ob es sich um ein Originalprodukt eines bestimmten Herstellers handelt. Insbesondere kann dabei ein bestimmter herstellerspezifischer Code abgefragt werden, der auf der Speichereinrichtung gespeichert ist. Es ist erfindungsgemäss dann des Weiteren vorgesehen, dass entweder der Benutzer über das Ergebnis der Autorisierungsprüfung in geeigneter Weise informiert wird und gegebenenfalls das Ergebnis der Prüfung in einer Steuereinrichtung des Bewitterungsprüfgeräts gespeichert bzw. protokolliert wird. Es ist erfindungsgemäss andernfalls vorgesehen, dass nur im Falle eines positiven Ergebnisses der Autorisierungsprüfung die betreffende Strahlungsquelle zum Betrieb freigegeben wird, andernfalls jedoch ein Betrieb der Strahlungsquelle automatisch unterbunden wird, etwa indem die elektrische Leistungszufuhr zu der Strahlungsquelle blockiert wird. Andernfalls kann auch vorgesehen sein, dass der Benutzer lediglich über das Ergebnis der Autorisierungsprüfung informiert wird, des Weiteren jedoch unabhängig von deren Ergebnis keine Einschränkungen beim Betrieb der Strahlungsquelle vorgenommen werden.

Es kann darüber hinaus vorgesehen sein, dass die Strahlungsquelle als eine bestimmte Strahlungsquelle identifiziert wird, um sie von anderen Strahlungsquellen unterscheidbar zu machen, beispielsweise durch einen zusätzlichen Code, welcher eineindeutig einer bestimmten Strahlungsquelle zugeordnet ist. Ersatzweise oder zusätzlich zu diesem Code können bestimmte Daten auf der Speichereinrichtung abgelegt sein, welche die Strahlungsquelle bezüglich ihrer Historie eineindeutig kennzeichnen, etwa ihr Herstellungsdatum, ihre Zugehörigkeit zu einer bestimmten Charge, eine Nummer innerhalb der Charge, oder etwa bereits zuvor abgeleistete Betriebsstunden und gegebenenfalls die in früheren Betriebsstunden abgegebene Strahlungsleistung, die von einem Sensor gemessen sein kann, und gegebenenfalls eine sich aus diesen Daten ergebende restliche Lebensdauer der Strahlungsquelle.

Gemäß einer Ausführungsform der erfindungsgemäßen Vorrichtung ist die Speichereinrichtung als Teil einer elektronischen Schaltung, insbesondere eines RFID-Chips oder RFID-Tags ausgebildet. Der RFID-Chip kann hinsichtlich seiner Energieversorgung passiv oder aktiv ausgelegt sein, wobei ihm in der passiven Ausbildung elektrische Leistung über die ihm übersendete RF-Strahlung zugeführt wird und er in der aktiven Form eine interne Energieversorgungsquelle wie eine Batterie oder einen Akkumulator aufweist.

Gemäß einer Ausführungsform der erfindungsgemäßen Vorrichtung ist die Speichereinrichtung derart ausgelegt, dass auf ihr Daten, wie etwa die geleisteten Betriebsstunden der Strahlungsquelle und eine daraus errechnete restliche Lebensdauer, speicherbar und insbesondere im Laufe der weiteren Betriebsdauer der Strahlungsquelle überschreibbar sind.

Gemäß einer Ausführungsform der erfindungsgemäßen Vorrichtung weist diese eine Steuereinrichtung auf, welche eingerichtet ist, Daten auf der Speichereinrichtung zu speichern und von der Speichereinrichtung Daten auszulesen. Insbesondere ist für den Fall, dass die Speichereinrichtung Teil eines RFID-Chips ist, die Steuereinrichtung mit einer RFID-Leseeinrichtung gekoppelt oder enthält eine solche.

Gemäß einer Ausführungsform der erfindungsgemäßen Vorrichtung ist die mindestens eine Strahlungsquelle durch eine Xenon-Gasentladungslampe gebildet. Es sind jedoch auch andere Strahlungsquellen wie Metallhalogenidlampen oder Fluoreszenzlampen als Strahlungsquellen denkbar.

Gemäß einer Ausführungsform der erfindungsgemäßen Vorrichtung ist die Speichereinrichtung gewissermaßen untrennbar mit der Strahlungsquelle verbunden, was bedeuten soll, dass die Speichereinrichtung kundenseitig nicht beschädigungsfrei von der Strahlungsquelle lösbar ist. Dies soll dazu dienen, etwaigen Manipulationsversuchen vorzubeugen.

Gemäß einer Ausführungsform der erfindungsgemäßen Vorrichtung kann die Strahlungsquelle auch mit einem weiteren Element zur Autorisierung und/oder Identifizierung der Strahlungsquelle verbunden sein, beispielsweise einem Bar-Code, welcher zusätzliche Informationen über die Strahlungsquelle bereitstellen kann.

Gemäß einer Ausführungsform der erfindungsgemäßen Vorrichtung weist diese eine Mehrzahl von Strahlungsquellen auf, welche unabhängig voneinander betreibbar sind, wobei vorgesehen sein kann, dass jede Strahlungsquelle erfindungsgemäß eine Speichereinrichtung aufweist.

Gemäß einer Ausführungsform der erfindungsgemäßen Vorrichtung weist diese eine Steuereinrichtung auf, welche konfiguriert ist, Steuersignale zur Ansteuerung der mindestens einen Strahlungsquelle zu erzeugen und im Falle von mehreren Strahlungsquellen eine Mehrzahl von Ausgängen aufweist, welche mit der Mehrzahl von Strahlungsquellen verbindbar sind. Insbesondere kann vorgesehen sein, dass die Steuereinrichtung konfiguriert ist, aufgrund einer nutzerseitig gewünschten kombinierten Strahlungsleistung der Strahlungsquellen einen optimalen Betriebsmodus zu ermitteln, bei welchem die Strahlungsquellen geringstmöglichen Belastungen ausgesetzt sind. Es kann beispielsweise vorgesehen sein, dass die Speichereinrichtung jeder der Strahlungsquellen durch die Steuereinrichtung auslesbar ist und der ausgelesene Wert der von den Strahlungsquellen bereits zuvor geleisteten Betriebsstunden und/oder der daraus ermittelten restlichen Lebensdauer der Strahlungsquellen von der Steuereinrichtung für die Ermittlung des optimalen Betriebsmodus verwendet wird. Zum Zwecke der Ermittlung des optimalen Betriebsmodus kann in der Steuereinrichtung beispielsweise ein Expertensystem enthalten sein.

Die vorliegende Erfindung bezieht sich ebenso auf eine Strahlungsquelle für eine Vorrichtung zur künstlichen Bewitterung oder Lichtechtheitsprüfung von Proben, welche mit einer Speichereinrichtung versehen ist, in welcher Daten über die Strahlungsquelle gespeichert oder speicherbar sind.

Weitere Ausführungsformen der erfindungsgemäßen Strahlungsquelle können gemäß der vorstehend beschriebenen Ausführungsformen für die Vorrichtung zur künstlichen Bewitterung oder Lichtechtheitsprüfung gebildet werden.

Im Folgenden wird die Erfindung anhand von Ausführungsbeispielen in Verbindung mit den Zeichnungsfiguren noch näher erläutert. Es zeigen:

Fig. 1A,B eine schematische Darstellung einer Ausführungsform einer erfindungsgemäßen Vorrichtung zur künstlichen Bewitterung oder Lichtechtheitsprüfung von Proben in einem Querschnitt (A) und einem Längsschnitt (B).

Fig. 2 ein schematisches Blockschaltbild eines Schaltkreises zur Ansteuerung von zwei Strahlungsquellen einer Vorrichtung zur künstlichen Bewitterung oder Lichtechtheitsprüfung von Proben.

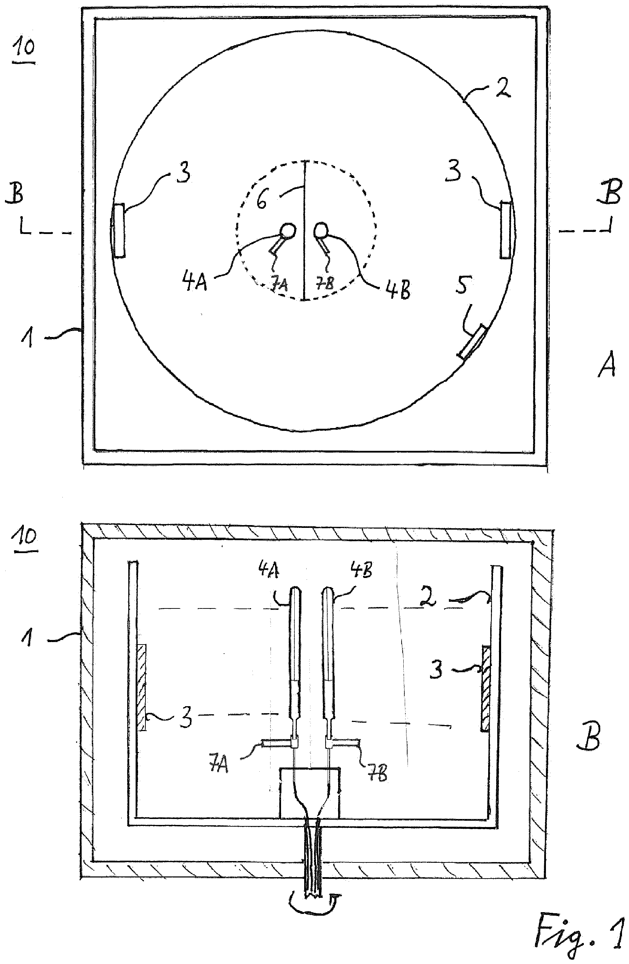

In der Fig. 1A,B ist eine erfindungsgemäße Vorrichtung 10 zur künstlichen Bewitterung oder Lichtechtheitsprüfung von Proben in einem Querschnitt (A) und einem Längsschnitt (B) schematisch dargestellt. Jede der Strahlungsquellen 4A und 4B ist mit einer Speichereinrichtung 7A bzw. 7B verbunden, welche insbesondere einen RFID-Chip oder eine andere elektronische Speichereinrichtung aufweisen kann.

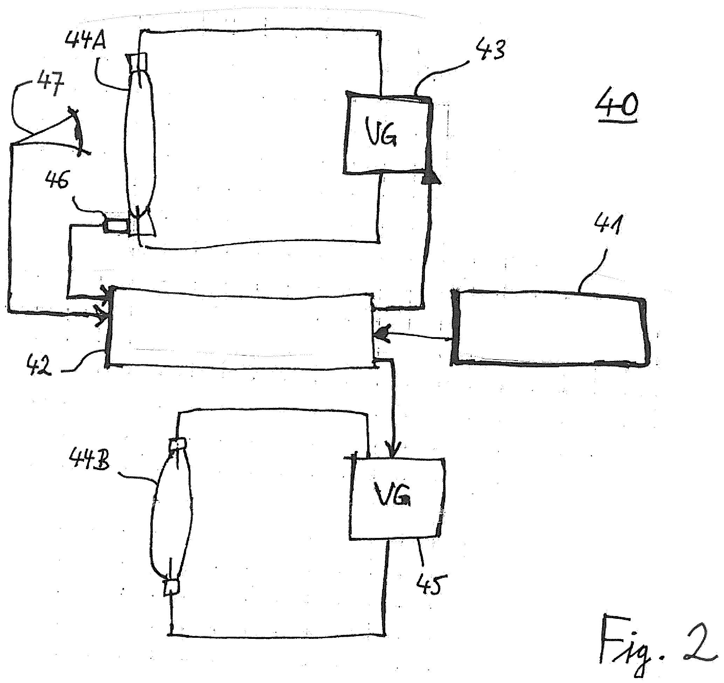

Die Vorrichtung 10 umfasst eine Bewitterungskammer 1, innerhalb der eine künstliche Bewitterung oder Lichtechtheitsprüfung von Proben durchgeführt werden kann. In der Bewitterungskammer 1 ist ein ringförmig geschlossener Halterungsrahmen 2 drehbar gelagert, welcher auf seiner Innenseite geeignet geformte Halterungselemente (nicht gezeigt) aufweist, mittels derer Proben 3 oder Werkstücke, beispielsweise rechteckige Lackproben genormter Größe, gehaltert werden können. Der Halterungsrahmen 2 ist insbesondere in einem seitlichen Querschnitt kreisförmig, so dass die Proben 3 bei Drehung des Halterungsrahmens 2 auf einer geschlossenen Kreisbahn geführt werden. Innerhalb des Halterungsrahmens 2 und im Wesentlichen konzentrisch mit diesem sind zwei Strahlungsquellen 4A und 4B angeordnet, welche beispielsweise durch Xenon-Gasentladungslampen gebildet sein können. Es können auch mehr als zwei Strahlungsquellen vorgesehen sein. Insbesondere können drei Strahlungsquellen so angeordnet werden, dass sie im Querschnitt an den Ecken eines gleichschenkligen Dreiecks zu liegen kommen. Wie in Fig.2 dargestellt, können die beiden Strahlungsquellen 4A und 4B durch langgestreckte oder longitudinale Strahlungskörper, insbesondere Glaskolben, gebildet sein, welche zueinander parallel ausgerichtet sind. Die gesamte Anordnung kann dermaßen rotationssymmetrisch ausgebildet sein, dass eine Drehachse der Drehbewegung des Halterungsrahmens 2 mit einer Mittel- oder Symmetrieachse der beiden Strahlungsquellen 4A und 4B zusammenfällt. Es kann vorgesehen sein, dass eine Mehrzahl von Proben 3 an dem Halterungsrahmen 2, insbesondere an dafür vorgesehenen in Umfangsrichtung des Halterungsrahmens 2 angeordneten Halterungselementen befestigt werden können. Es können darüber hinaus die Proben 3 auch in mehreren Ebenen übereinander am Halterungsrahmen 2 befestigt werden. Die Strahlungsquellen 4A und 4B können unabhängig voneinander betreibbar bzw. ansteuerbar sein, wie weiter unten noch näher ausgeführt werden wird.

In der Bewitterungskammer 1 kann des Weiteren ein Strahlungssensor 5 angeordnet sein, welcher die Strahlungsleistung der von den Strahlungsquellen 4A und 4B emittierten Strahlung detektiert. Der Strahlungssensor 5 kann wie die Proben 3 an dem Halterungsrahmen 2 befestigt sein und mit diesen um die aus den zwei Strahlungsquellen 4A,B bestehende Strahlungsanordnung umlaufen, also als mitlaufender Strahlungssensor 5 ausgebildet sein. Das Ausgangssignal des Strahlungssensors 5 kann einer externen Steuereinrichtung zugeführt werden, wie nachfolgend noch näher beschrieben werden wird. Der Strahlungssensor 5 kann so ausgebildet sein, dass er eine von ihm detektierte momentane Strahlungsleistung als ein entsprechendes elektrisches Messsignal ausgibt. Es kann ferner vorgesehen sein, dass zwischen den Strahlungsquellen 4A und 4B ein Absorberblech 6 angeordnet ist, so dass der Strahlungssensor 5 in jeder denkbaren Position auf seiner Umlaufbahn jeweils nur die von einer der Strahlungsquellen 4A,B emittierte Strahlung detektiert. Der Strahlungssensor 5 kann wie dargestellt gegenüber den Proben 3 in Umfangsrichtung der Halterungseinrichtung 2 versetzt angeordnet sein. Er könnte ebenso gut auch ohne Umfangsversetzung in Höhenrichtung gegenüber den Proben 3 oder sowohl in Höhen- als auch in Umfangsrichtung gegenüber den Proben 3 versetzt angeordnet sein.

Die Bewitterungskammer 1 kann in an sich bekannter Weise weitere Einrichtungen zur künstlichen Bewitterung, wie beispielsweise Feuchtigkeitserzeuger oder dergleichen, aufweisen, auf die im Folgenden nicht weiter eingegangen werden soll. Es kann beispielsweise auch ein Luftstrom in die Bewitterungskammer 1 eingeleitet werden, der in vertikaler Richtung an den Proben 3 und/oder an den Strahlungsquellen 4A und 4B vorbei streicht.

In der Bewitterungskammer 1 können auch anstelle des mitlaufenden Strahlungssensors 5 oder zusätzlich zu diesem stationäre Strahlungssensoren angeordnet sein, welche die Strahlungsleistung der von den Strahlungsquellen 4A und 4B emittierten Strahlung detektieren. Die Strahlungssensoren können innerhalb der Bewitterungskammer 1 stationär angeordnet sein und sie können insbesondere derart angeordnet sein, dass jeder der Strahlungssensoren jeweils nur die von einer der beiden Strahlungsquellen 4A und 4B emittierte Strahlungsleistung detektiert. Die Ausgangssignale des oder der Strahlungssensoren können einer externen Steuereinrichtung zugeführt werden, wie nachfolgend noch näher beschrieben werden wird.

In der Fig. 2 ist ein Blockschaltbild zur Veranschaulichung der Ansteuerung der Strahlungsquellen einer Vorrichtung zur künstlichen Bewitterung oder Lichtechtheitsprüfung dargestellt. Die Schaltungsanordnung 40 dient dazu, zwei verschiedene Strahlungsquellen 44A und 44B unabhängig voneinander anzusteuern. Die Strahlungsquellen der Fig. 2 können durch Gasentladungslampen, insbesondere Xenon-Gasentladungslampen, gebildet sein, welche jeweils mit Vorschaltgeräten verbunden sein können. Eine erste Strahlungsquelle 44A kann demzufolge mit ihren Anschlusskontakten mit einem ersten Vorschaltgerät 43 verbunden sein und eine zweite Strahlungsquelle 44B kann mit ihren Anschlusskontakten mit einem zweiten Vorschaltgerät 45 verbunden sein.

Die Schaltungsanordnung 40 kann ferner eine Benutzerschnittstelle 41 (user interface) aufweisen, mittels welcher ein Benutzer einen Testlauf zur Bewitterungsprüfung oder Lichtechtheitsprüfung von Proben durch Eingabe einer bestimmten Betriebsart oder bestimmter gewünschter Parameter einleiten kann. Die Benutzerschnittstelle 41 kann durch eine Tastatur, insbesondere die Tastatur eines PC, gegeben sein. Ein gewünschter Parameter kann beispielsweise eine von jeder der beiden Strahlungsquellen 44A und 44B zu emittierenden Strahlungsleistung oder auch eine von beiden additiv zu erbringende Gesamtstrahlungsleistung sein. Die Benutzerschnittstelle 41 kann ausgangsseitig mit einer Steuereinrichtung 42, wie einem Mikro-Controller oder Mikroprozessor, verbunden sein. Die Steuereinrichtung 42 kann zwei verschiedene Ausgänge aufweisen, welche mit den zwei Vorschaltgeräten 43 und 45 verbunden sein können. Die Steuereinrichtung 42 kann somit in der Lage sein, die Vorschaltgeräte 43 und 45 und somit letztlich die Strahlungsquellen 44A und 44B in unterschiedlicher Weise anzusteuern, insbesondere aufgrund einer an der Benutzerschnittstelle 41 getätigten Eingabe durch einen Benutzer. Es kann beispielsweise ein bestimmter Programmmodus einer bestimmten, vorgegebenen Bezeichnung (etwa XenoLogic), vorgesehen sein, welcher benutzerseitig auswählbar ist und welcher die Steuereinrichtung 42 dazu veranlasst, die Strahlungsquellen 44A und 44B unter Berücksichtigung einer vom Benutzer außerdem noch eingegebenen Gesamtstrahlungsleistung derart zu betreiben, dass für beide eine maximale Nutzungsdauer resultiert. Dies kann beispielsweise bedeuten, dass beim Start eines Testlaufs nur eine der beiden Strahlungsquellen für eine vorgegebene Zeitdauer betrieben wird und anschließend die zweite Strahlungsquelle dazu geschaltet wird. Sollte jedoch beispielsweise ein Gesamtstrahlungsleistung von 60 W/cm² (abhängig vom Lampentyp und in einem bestimmten Abstand zur Lampe) benutzerseitig gewünscht sein, so kann auch vorgesehen sein, von Beginn an beide Strahlungsquellen bei einer Strahlungsleistung von 30 W/cm² zu betreiben.

Der Steuereinrichtung 42 können zusätzlich zu diesen Vorgaben von der Benutzerschnittstelle 41 noch weitere Informationen zugeführt werden, welche sie für die Steuerung der Strahlungsquellen 44A und 44B verwenden kann. So kann beispielsweise, wie in den vorherigen Ausführungsbeispielen gezeigt, ein Strahlungssensor 47 vorgesehen sein, welcher individuell die von der Strahlungsquelle 44A emittierte Strahlung detektiert und ein die detektierte Strahlungsleistung repräsentierendes Messsignal der Steuereinrichtung 42 übermittelt. Der Strahlungssensor 47 kann als umlaufender Strahlungssensor ausgebildet sein. In der Darstellung der Fig. 2 ist der Strahlungssensor 47 momentan auf die Strahlungsquelle 44A ausgerichtet und misst somit momentan deren emittierte Strahlungsleistung. Sollte nun beispielsweise die Strahlungsquelle 44A in ihrer Leistungsfähigkeit nachlassen und der Strahlungssensor dies entsprechend detektieren und an die Steuereinrichtung 42 melden, so kann die Steuereinrichtung 42 vorsehen, dass eine entsprechend höhere elektrische Leistung an das Vorschaltgerät 43 geliefert wird. In gleicher Weise kann auch die von der zweiten Strahlungsquelle 44B emittierte Strahlung von dem Strahlungssensor 47 (oder einem weiteren Strahlungssensor) detektiert werden und ein die Strahlungsleistung repräsentierendes Messsignal an die Steuereinrichtung 42 geliefert werden.

Es kann vorgesehen sein, dass eine oder beide der Strahlungsquellen 44A und 44B mit einer Speichereinrichtung 46, insbesondere einem elektronischen Schaltkreis wie einem RFID-Chip, versehen sind, auf welchem beispielsweise, wie weiter oben beschrieben, ein herstellerspezifischer Code und/oder weitere Daten, wie die geleisteten Betriebsstunden der Strahlungsquelle, speicherbar sind. Der RFID-Chip 46 kann insbesondere untrennbar mit der jeweiligen Strahlungsquelle verbunden sein, insbesondere kann vorgesehen sein, dass er nicht benutzerseitig von der Strahlungsquelle abgetrennt werden kann, ohne Beschädigungen zu verursachen. Beim Betrieb der Strahlungsquelle kann, beispielsweise durch einen Strahlungssensor, gemessen werden, wie lange und bei welcher Ausgangsstrahlungsleistung die Strahlungsquelle bereits betrieben worden ist und das Ergebnis kann durch die Steuereinrichtung 42 ausgewertet und auf dem elektronischen Schaltkreis 46 gespeichert werden. Bei jeder neuen Inbetriebnahme der Strahlungsquelle kann zunächst der elektronische Schaltkreis 46 ausgelesen werden und das Ergebnis kann der Steuereinrichtung 42 zugeführt werden, welche dieses für ihre Berechnung der optimalen Betriebsweise dieser und der anderen Strahlungsquellen für einen folgenden Testlauf berücksichtigt. Es kann des Weiteren noch vorgesehen sein, dass in der Steuereinrichtung 42 ein Expertensystem abgelegt ist, welchem sämtliche Daten, insbesondere Sensordaten, verbleibende Lebensdauerdaten, gewünschte Gesamtstrahlungsleistung etc., zugeführt werden können, und welches daraufhin entscheidet, in welcher Weise die Strahlungsquellen mit dem Ziel einer möglichst langen Nutzungsdauer betrieben werden sollten.

## Patentansprüche

1. Vorrichtung zur künstlichen Bewitterung oder Lichtechtheitsprüfung von Proben, mit
- einer Bewitterungskammer (1), in welcher mindestens eine Probe (3) anordenbar ist; und
- mindestens einer Strahlungsquelle (44A), welche in der Bewitterungskammer (1) angeordnet ist, wobei die Strahlungsquelle (44A) mit einer Speichereinrichtung (46) verbunden ist, in welcher Daten über die Strahlungsquelle (44A) speicherbar oder gespeichert sind;
**dadurch gekennzeichnet, dass** die Speichereinrichtung (46) an der Strahlungsquelle (44A) angebracht ist; und
die Vorrichtung ferner eine Steuereinrichtung (42) zur Ansteuerung der Strahlungsquelle (44A) aufweist,
wobei die Steuereinrichtung (42) eingerichtet ist, Daten in der Speichereinrichtung (46) zu speichern und Daten von der Speichereinrichtung auszulesen,
und wobei in der Speichereinrichtung (46) gespeicherte Daten der Autorisierung der Strahlungsquelle (44A) dienen, wobei bei einer Autorisierungsprüfung geprüft wird, ob es sich um ein Originalprodukt eines bestimmten Herstellers handelt,
und wobei die Steuereinrichtung (42) ferner eingerichtet ist, entweder nur im Falle eines positiven Ergebnisses der Autorisierungsprüfung die Strahlungsquelle (44A) zum Betrieb freizugeben, andernfalls jedoch den Betrieb der Strahlungsquelle (44A) automatisch zu unterbinden,
oder den Benutzer lediglich über das Ergebnis der Autorisierungsprüfung zu informieren, des Weiteren jedoch unabhängig von deren Ergebnis keine Einschränkungen beim Betrieb der Strahlungsquelle (44A) vorzunehmen.

2. Vorrichtung nach Anspruch 1, bei welcher
in der Speichereinrichtung (46) eine Information gespeichert ist, welche die Strahlungsquelle (44A) eindeutig identifiziert.

3. Vorrichtung nach Anspruch 1 oder 2, bei welcher
die geleisteten Betriebsstunden und/oder eine restliche Lebensdauer der Strahlungsquelle (44A) ermittelbar und in der Speichereinrichtung (46) speicherbar und insbesondere im Laufe der Betriebsdauer der Strahlungsquelle (44A) überschreibbar ist.

4. Vorrichtung nach einem der vorhergehenden Ansprüche, bei welcher
die Speichereinrichtung (46) einen RFID-Chip (46) aufweist.

5. Vorrichtung nach einem der vorhergehenden Ansprüche, bei welcher
die mindestens eine Strahlungsquelle (44A) durch eine Xenon-Gasentladungslampe gebildet ist.

6. Vorrichtung nach einem der vorhergehenden Ansprüche, bei welcher
eine Mehrzahl von Strahlungsquellen (44A, 44B) vorhanden ist, welche unabhängig voneinander betreibbar sind.

7. Vorrichtung nach Anspruch 6, bei welcher
die Steuereinrichtung (42) konfiguriert ist, Steuersignale zur Ansteuerung der Strahlungsquellen (44A, 44B) zu erzeugen und welche eine Mehrzahl von Ausgängen aufweist, welche mit der Mehrzahl von Strahlungsquellen (44A, 44B) verbindbar sind.

8. Vorrichtung nach einem der vorhergehenden Ansprüche, bei welcher
die Steuereinrichtung (42) konfiguriert ist, aufgrund einer nutzerseitig gewünschten kombinierten Strahlungsleistung der Strahlungsquellen (44A, 44B) einen optimalen Betriebsmodus zu ermitteln, bei welchem die Strahlungsquellen (4A, 44B) geringstmöglichen Belastungen ausgesetzt sind.

9. Vorrichtung nach den Ansprüchen 3 und 8, bei welcher die Speichereinrichtung (46) jeder der Strahlungsquellen (44A, 44B) durch die Steuereinrichtung (42) auslesbar ist und der ausgelesene Wert der geleisteten Betriebsstunden und/oder der restlichen Lebensdauer der Strahlungsquellen (44A, 44B) von der Steuereinrichtung (42) für die Ermittlung des optimalen Betriebsmodus verwendet wird.

## Claims

1. An apparatus for artificial weathering or lightfastness testing of samples, comprising
- a weathering chamber (1) in which at least one sample (3) can be arranged; and
- at least one radiation source (44A) which is arranged in the weathering chamber (1), the radiation source (44A) being connected to a memory device (46) in which data about the radiation source (44A) can be stored or are stored;
**characterIzed in that**
the storage means (46) is attached to the radiation source (44A); and
the apparatus further comprises control means (42) for driving the radiation source (44A),
the control means (42) being adapted to store data in said storage means (46) and to read data from the storage means,
and wherein data stored in the storage means (46) is for authorizing the radiation source (44A), wherein an authorization check checks whether it is an original product of a particular manufacturer,
and wherein the control means (42) is further adapted to either enable the radiation source (44A) to operate only in the event of a positive result of the authorization check, but otherwise automatically inhibit the operation of the radiation source (44A),
or to inform the user only of the result of the authorization check, but also not to impose any restrictions on the operation of the radiation source (44A) regardless of the result of the authorization check.

2. The apparatus according to claim 1, in which
information uniquely identifying the radiation source (44A) is stored in the storage means (46).

3. The apparatus according to claim 1 or 2, in which
the operating hours performed and/or a remaining service life of the radiation source (44A) can be determined and stored in the storage device (46) and in particular can be overwritten in the course of the operating time of the radiation source (44A).

4. The apparatus in accordance with one of the preceding claims, in which
the memory device (46) comprises an RFID chip (46).

5. The apparatus according to one of the preceding claims, in which
the at least one radiation source (44A) is formed by a Xenon gas discharge lamp.

6. The apparatus according to one of the preceding claims, in which
a plurality of radiation sources (44A, 44B) are present which are independently operable.

7. The apparatus according to claim 6, in which
the controller (42) is configured to generate control signals for driving the radiation sources (44A, 44B) and having a plurality of outputs connectable to the plurality of radiation sources (44A, 44B).

8. The apparatus according to one of the preceding claims, in which
the control means (42) is configured to determine an optimum mode of operation in which the radiation sources (4A, 44B) are subjected to the least possible loads based on a combined radiation power of the radiation sources (44A, 44B) desired by the user.

9. The apparatus according to claims 3 and 8, in which
the storage means (46) of each of the radiation sources (44A, 44B) is readable by the control means (42), and the read-out value of the hours of operation performed and/or the remaining life of the radiation sources (44A, 44B) is used by the control means (42) for determining the optimum operating mode.

## Revendications

1. Appareils d'essai de vieillissement artificiel ou de résistance à la lumière d'échantillons, comprenant
- une chambre de vieillissement (1) dans laquelle au moins un échantillon (3) peut être disposé; et
- au moins une source de rayonnement (44A) qui est disposée dans la chambre de vieillissement (1), la source de rayonnement (44A) étant reliée à un dispositif de mémoire (46) dans lequel des données concernant la source de rayonnement (44A) peuvent être ou sont enregistrées;
**caractérisé en ce que**
ledit dispositif de mémoire (46) est fixé à ladite source de rayonnement (44A); et
l'appareil comprend en outre des dispositifs de commande (42) pour commander la source de rayonnement (44A),
ledit dispositif de commande (42) étant adapté pour stocker des données dans ledit dispositif de mémoire (46) et pour lire des données dans ledit dispositif de mémoire,
et dans lequel les données stockées dans le dispositif de mémoire (46) sont destinées à autoriser la source de rayonnement (44A), dans lequel un contrôle d'autorisation vérifie si elle est un produit original d'un fabricant particulier,
et dans lequel le dispositif de commande (42) est en outre adapté pour permettre à la source de rayonnement (44A) soit de ne fonctionner qu'en cas de résultat positif du contrôle d'autorisation, soit d'empêcher automatiquement le fonctionnement de la source de rayonnement (44A),
soit d'informer l'utilisateur uniquement du résultat du contrôle des autorisations, mais aussi de ne pas imposer de restrictions au fonctionnement de la source de rayonnement (44A) quel que soit le résultat du contrôle des autorisations.

2. Appareil selon la revendication 1, dans lequel
des informations identifiant uniquement la source de rayonnement (44A) sont stockées dans le dispositif de mémoire (46).

3. Appareil selon la revendication 1 ou 2, dans lequel
les heures de fonctionnement effectuées et/ou une durée de vie restante de la source de rayonnement (44A) peuvent être déterminées et mémorisées dans le dispositif de mémorisation (46) et peuvent en particulier être écrasées pendant le temps de fonctionnement de la source de rayonnement (44A).

4. Appareil selon l'une des revendications précédentes, dans lequel
le dispositif de mémoire (46) comprend une puce RFID (46).

5. Appareil selon l'une des revendications précédentes, dans lequel
ladite au moins une source de rayonnement (44A) est formée par une lampe à décharge sans gaz Xe.

6. Appareil selon l'une des revendications précédentes, dans lequel
une pluralité de sources de rayonnement (44A, 44B) sont présentes, qui peuvent fonctionner indépendamment les unes des autres.

7. Appareil selon la revendication 6, dans lequel
le contrôleur (42) est configuré pour générer des signaux de commande pour commander les sources de rayonnement (44A, 44B) et ayant une pluralité de sorties pouvant être connectées à la pluralité de sources de rayonnement (44A, 44B).

8. Appareil selon l'une des revendications précédentes, dans lequel
le dispositif de commande (42) est configuré pour déterminer un mode de fonctionnement optimal dans lequel les sources de rayonnement (4A, 44B) sont soumises aux charges les plus faibles possibles sur la base d'une puissance de rayonnement combinée des sources de rayonnement (44A, 44B) souhaitée par l'utilisateur.

9. Appareil selon des revendications 3 et 8, dans lequel
le dispositif de mémoire (46) de chacune des sources de rayonnement (44A, 44B) peut être lu par le dispositif de commande (42), et la valeur de lecture des heures de fonctionnement effectuées et/ou la durée de vie restante des sources de rayonnement (44A, 44B) est utilisée par le dispositif de commande (42) pour déterminer le mode de fonctionnement optimal.
